# FASCICULE DE BREVET EUROPEEN

(11) **EP 1 705 041 B1**
(45) Date de publication et mention de la délivrance du brevet: **19.12.2007**
(21) Numéro de dépôt: 06290424.8
(22) Date de dépôt: 16.03.2006
(51) Int. Cl.: B60H 1/34

(54) **Aérateur pour véhicule comprenant des ailettes pourvues chacune d'une bielle de commande actionnée par une molette**
Fahrzeugluftausströmer mit Luftführungslamellen, die je mit einem drehscheibengesteuerten Antriebspleuel versehen sind
Vehicle nozzle having directing blades, each having a driving rod actuated by one rotary wheel

(30) Priorité: 23.03.2005 FR 0502877
(43) Date de publication de la demande: 27.09.2006
(73) Titulaire: Key Plastics International, 61130 Belleme (FR)
(72) Inventeur: Avanzini, Philippe, 61130 Belleme (FR); Bourreau, Guy, 17450 Fouras (FR); Davril, Jean-Louis, Loisé 61400 Mortagne au Perche (FR); Herouin, Yannick, 72300 Parce sur Sarthe (FR); Pinton, David, 61400 Mauves sur Huisne (FR)
(74) Mandataire: Lemoine, Robert

(56) Documents cités:
- WO-A-02/100669
- DE-C1- 10 145 267
- US-A- 5 063 833

## Description

La présente invention concerne un aérateur pour introduire de l'air dans l'habitacle d'un véhicule, notamment d'une automobile, comprenant un corps délimitant un conduit comportant une entrée destinée à être reliée à une arrivée d'air conditionné et une sortie débouchant dans l'habitacle, et des ailettes disposées au niveau de la sortie du conduit et déplaçables entre deux positions extrêmes de façon à modifier la direction du flux d'air, ces ailettes comportant deux tourillons coaxiaux faisant saillie sur leurs faces transversales et montés pivotants sur deux côtés opposés prédéterminés de la sortie du conduit, chacun des tourillons situés d'un même côté des ailettes étant solidaire d'une bielle portant un téton s'étendant parallèlement au tourillon correspondant, du côté opposé à celui-ci, les tétons des bielles étant logés dans des pistes de guidage ménagées dans un organe de commande monté mobile sur le corps entre des première et seconde positions extrêmes, les pistes de guidage étant conformées pour que les bielles obligent les ailettes à venir dans l'une de leurs positions extrêmes lorsque l'organe de commande est dans sa première position extrême et dans leur autre position extrême lorsque l'organe de commande est dans sa seconde position extrême.

La plupart des aérateurs installés actuellement sur les véhicules automobiles sont constitués de nombreuses pièces rendant leur fabrication difficile et coûteuse.

Par ailleurs, les ailettes de ces aérateurs laissent passer une certaine quantité d'air en direction de l'habitacle lorsqu'elles sont dans leur position extrême fermée, ce qui peut être gênant pour les passagers du véhicule.

US-A-5 063 833 décrit un aérateur tel que celui présenté ci-dessus et dont les ailettes sont déplaçables entre leurs positions extrêmes par un organe de commande mobile en translation par rapport au corps. La présence de cet organe complique toutefois la structure de l'aérateur.

DE 101 45 267 C1 et WO 02/100669A décrivent des aérateurs dont l'organe de commande ne comprend pas de pistes de guidage, mais seulement des encoches de pivotement, pour les tétons des bielles.

La structure de ces aérateurs est elle aussi compliquée du fait notamment que le mouvement de l'organe de commande par rapport au corps est un mouvement composé de translation-rotation.
La présente invention se propose de remédier aux inconvénients de l'état antérieur de la technique, et pour se faire, elle a pour objet un aérateur du type décrit dans le document US-A-5 063 833, qui est caractérisé en ce que la position extrême mentionnée en premier des ailettes est une position ouverte dans laquelle celles-ci s'étendent approximativement parallèlement à la direction du flux d'air circulant devant elles, alors que l'autre position extrême des ailettes est une position fermée dans laquelle celles-ci s'étendent approximativement perpendiculairement à la direction de sortie du flux d'air hors du conduit, en ce que les tourillons des ailettes sont respectivement logés dans des encoches ménagées dans les deux côtés opposés prédéterminés de la sortie du conduit, et en ce que l'organe de commande est déplaçable par pivotement sur le corps.

L'aérateur selon l'invention est constitué d'un nombre limité de pièces et peut donc être fabriqué dans des conditions très compétitives.

En outre, sa structure particulière interdit toute circulation d'air en direction de l'habitacle du véhicule lorsque les ailettes sont dans leur position extrême fermée, et évite par conséquent que les passagers soient gênés par un courant d'air non souhaité.

De préférence, les ailettes sont en contact intime les unes à la suite des autres et obturent complètement la sortie du conduit lorsqu'elles sont dans leur position extrême fermée.

De l'air ne peut donc passer entre chacune des ailettes lorsque celles-ci sont dans leur position extrême fermée, ce qui améliore notablement le confort des passagers se trouvant devant l'aérateur.

Afin d'assurer une fermeture parfaitement étanche de la sortie du conduit de l'aérateur par les ailettes lorsque celles-ci sont en position extrême fermée, les tourillons des lamelles sont de préférence situés dans le prolongement de l'un des côtés longitudinaux de celles-ci.

Par ailleurs, pour permettre une installation facile, rapide et sûre des ailettes sur le corps de l'aérateur, il est souhaitable que les encoches comportent un fond dont la forme est complémentaire de celle des tourillons et deux parois latérales pourvues chacune d'une protubérance, les protubérances des parois latérales de chacune des encoches étant situées l'une en face de l'autre et maintenant en place le tourillon correspondant.

Selon un mode de réalisation préféré, l'organe de commande des ailettes est une molette triangulaire comportant une périphérie arquée accessible depuis l'intérieur de l'habitacle du véhicule.

Avantageusement, la périphérie de la molette est crantée et offre ainsi une meilleure prise à l'usager qui souhaite déplacer les ailettes à l'aide d'un doigt.

Pour des raisons d'esthétique, le corps de l'aérateur peut par ailleurs être recouvert par un cache comprenant une première ouverture située devant la sortie du conduit et une seconde ouverture livrant passage à la périphérie de la molette.

Un mode d'exécution de la présente invention sera décrit ci-après à titre d'exemple nullement limitatif en référence aux dessins annexés dans lesquels :
- la figure 1 est une vue schématique en perspective montrant un aérateur conforme à l'invention, cet aérateur étant installé derrière un cache fixé sur le tableau de bord d'un véhicule automobile ;
- la figure 2 est une vue en perspective schématique du corps de l'aérateur dont les ailettes sont en position extrême fermée,
- la figure 3 est une vue analogue à la figure 2 mais sur laquelle les ailettes sont en position extrême ouverte ;
- la figure 4 est une vue de face schématique du corps de l'aérateur dont les ailettes sont en position extrême fermée ;
- la figure 5 est une vue partielle prise selon la ligne V-V de la figure 4,
- la figure 6 est une vue de côté schématique et avec arrachement du corps de l'aérateur dont les ailettes sont en position extrême fermée ; et
- la figure 7 est une vue analogue à la figure 6 mais sur laquelle les ailettes sont en position extrême ouverte.

L'aérateur représenté sur les dessins a été conçu pour être installé sur le tableau de bord d'une automobile.

Il va de soi cependant que l'on ne sortirait pas du cadre de la présente invention si cet aérateur était installé sur le panneau intérieur d'une portière ou sur tout autre support situé dans l'habitacle de l'automobile. Il pourrait également être utilisé pour diffuser de l'air dans l'habitacle d'un véhicule de transport tel qu'un avion ou un wagon.

L'aérateur visible sur les dessins comprend un corps 1 situé derrière un cache 2 fixé d'une manière connue en soi dans un évidemment ménagé dans le tableau de bord 3.

Le corps 1 est coudé et présente une partie antérieure dirigée vers le haut. Il délimite un conduit 4 comportant une entrée 5 destinée à être reliée d'une manière conventionnelle à l'installation climatisée, non représentée, du véhicule automobile, et une sortie 6 débouchant dans l'habitacle.

L'aérateur comprend également des ailettes parallèles 7, quatre dans le mode de réalisation représenté, disposées au niveau de la sortie 6 et destinées à modifier la direction du flux d'air pénétrant dans l'habitacle ou à empêcher le flux d'air de pénétrer dans celui-ci.

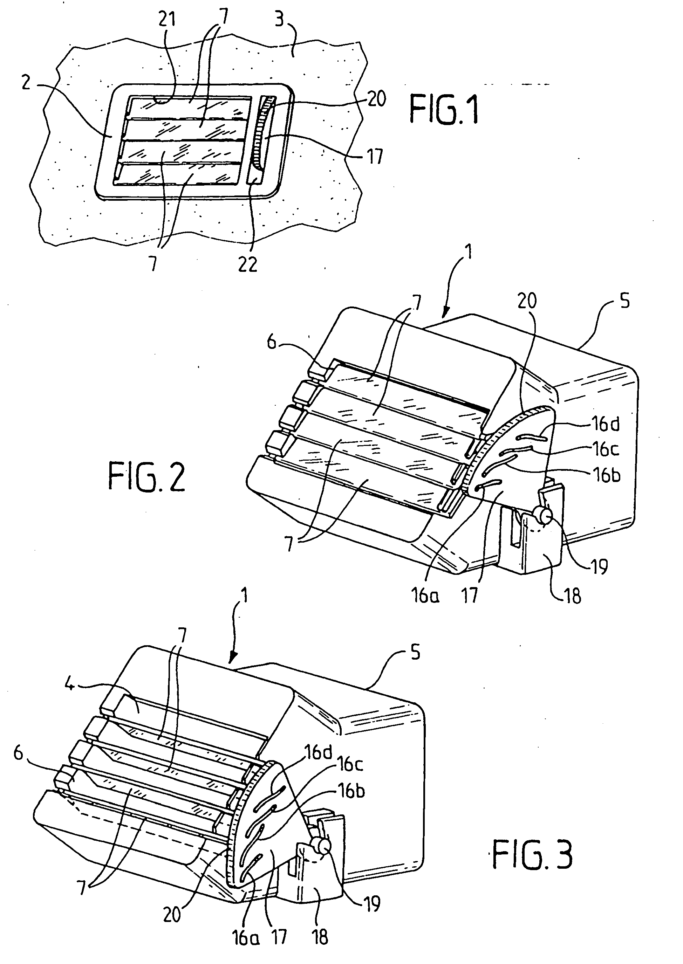

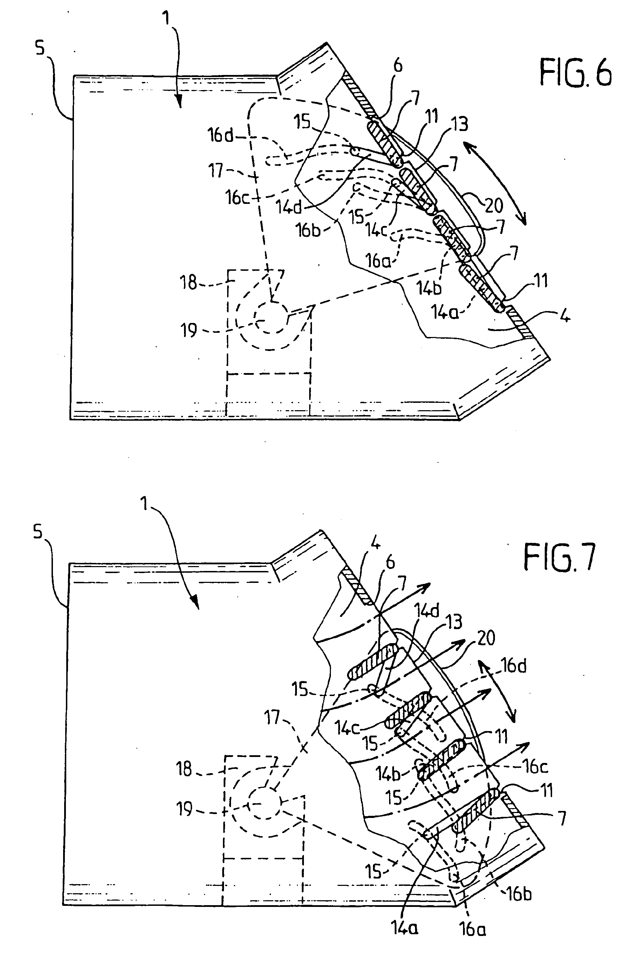

Les ailettes 7 sont déplaçables entre une position extrême ouverte (visible sur les figures 3 et 7) dans laquelle elles s'étendent approximativement parallèlement à la direction du flux d'air circulant devant elles et une position extrême fermée (visible sur les fibures 1, 2 et 4 à 6) dans laquelle elles s'étendent approximativement perpendiculairement à la direction du flux d'air sortant du conduit 4.

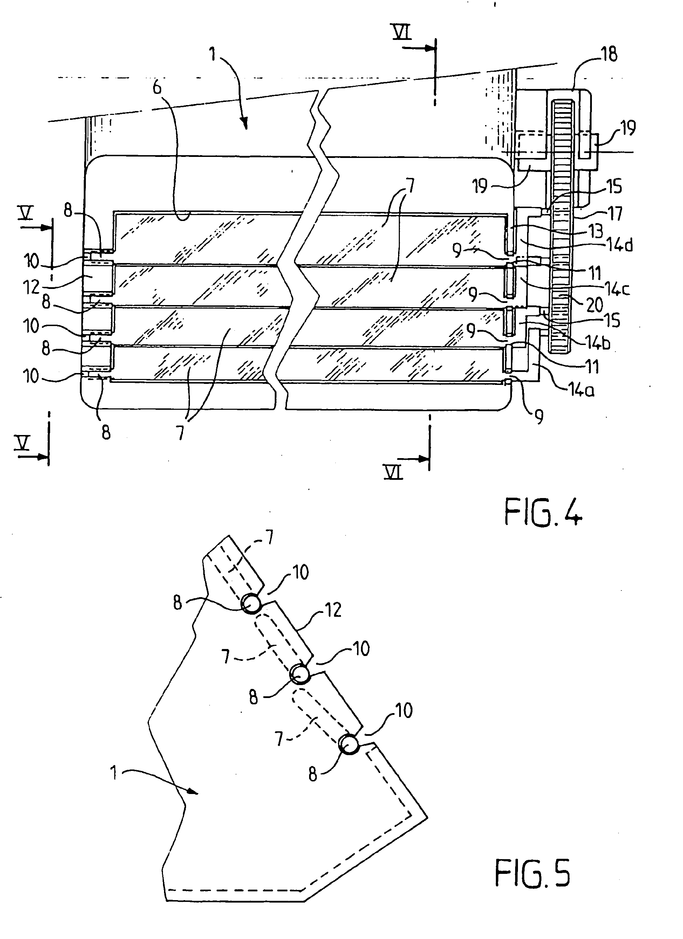

En se référant plus particulièrement à la figure 4, on remarquera que les ailettes 7 comportent deux tourillons coaxiaux 8, 9 faisant saillie sur leurs faces transversales.

Les tourillons 8, 9 sont situés dans le prolongement de l'un des côtés longitudinaux des ailettes 7 et sont logés dans des encoches 10, 11 respectivement ménagées dans deux côtés opposés 12, 13 de la sortie 6 du conduit.

Comme le montre la figure 5, les encoches 10 comportent un fond dont la forme est complémentaire de celle des tourillons 8, et deux parois latérales pourvues chacune d'une protubérance.

Plus précisément, les protubérances des parois latérales de chacune des encoches 10 sont situées l'une en face de l'autre et maintiennent en place le tourillon 8 correspondant.

Bien que cela ne soit pas clairement représenté sur les dessins, les encoches 11 comportent également un fond dont la forme est complémentaire de celle des tourillons 9, et deux parois latérales pourvues chacune d'une protubérance, les protubérances des parois latérales des encoches 11 étant situées l'une en face de l'autre et maintenant en place le tourillon 9 correspondant.

Comme le corps 1 de l'aérateur est réalisé en matière plastique, on conçoit aisément que l'introduction des tourillons 8, 9 dans les encoches 10, 11 correspondantes peut être assurée facilement par une simple opération d'encliquetage.

En revenant à la figure 4, on notera que les tourillons 9 situées dans les encoches 11 ménagées dans le côté 13 de la sortie 6 sont respectivement solidaires de bielles 14a-14d dont les extrémités libres portent chacune un téton 15 s'étendant parallèlement au tourillon correspondant, du côté opposé à celui-ci.

En se reportant maintenant aux figures 6 et 7, on pourra constater que les tétons 15 sont logés dans des pistes de guidage 16a-16d ménagées dans un organe de commande 17 monté pivotant sur le corps 1, entre une première position extrême visible sur les figures 3 et 7 et une seconde position extrême visible sur les figures 2 et 6.

Les pistes de guidage 16a-16d, qui sont constituées par des fentes incurvées de formes différentes, sont conformées pour que les bielles 14a-14d obligent les ailettes 7 à se déplacer progressivement de leur position extrême ouverte à leur position extrême fermée pendant que l'organe de commande 17 se déplace de sa première position extrême à sa seconde position extrême.

Dans leur position extrême ouverte, les lamelles 7 s'étendent parallèlement au flux d'air qui circule devant elles pour se rendre dans l'habitacle du véhicule. Comme le montre la figure 7, elles n'ont donc pratiquement aucune influence sur la direction du flux d'air pénétrant dans l'habitacle.

Dans leur position extrême fermée, les lamelles 7 sont jointives et s'étendent les unes à la suite des autres à travers la sortie 6 qui se trouve ainsi complètement fermée, comme le montre la figure 6.

Par ailleurs, quand les lamelles 7 sont dans une position intermédiaire entre leurs positions extrêmes ouverte et fermée, elles dévient vers le bas le flux d'air pénétrant dans l'habitacle.

En se référant maintenant aux figures 2 et 3, on remarquera que l'organe de commande 17 est constitué par une molette triangulaire montée pivotante sur une chape 18 solidaire de l'un des côtés longitudinaux du corps 1.

La molette 17 comporte un axe 19 faisant saillie sur chacune de ses grandes faces et retenu dans une gorge ménagée dans chacune des ailes de la chape 18, parallèlement aux tourillons 8, 9 des ailettes 7.

La périphérie 20 de la molette 17 se présente sous la forme d'un arc de cercle et est crantée pour que les passagers du véhicule puissent avoir une meilleure prise sur elle et puissent ainsi faire pivoter plus facilement la molette entre ses deux positions extrêmes.

En se reportant enfin à la figure 1, on pourra remarquer que le cache 2 qui est fixé sur le tableau de bord 3 comprend une ouverture 21 située devant la sortie 6 du conduit et une ouverture 22 livrant passage à la périphérie 20 de la molette.

## Revendications

1. Aérateur pour introduire de l'air dans l'habitacle d'un véhicule, notamment d'une automobile, comprenant un corps (1) délimitant un conduit (4) comportant une entrée (5) destinée à être reliée à une arrivée d'air conditionné et une sortie (6) débouchant dans l'habitacle, et des ailettes (7) disposées au niveau de la sortie du conduit et déplaçables entre deux positions extrêmes de façon à modifier la direction du flux d'air, ces ailettes comportant deux tourillons coaxiaux (8,9) faisant saillie sur leurs faces transversales et montés pivotants sur deux côtés opposés prédéterminés de la sortie (6) du conduit (4), chacun des tourillons (9) situés d'un même côté des ailettes étant solidaire d'une bielle (14a-14d) portant un téton s'étendant parallèlement au tourillon correspondant, du côté opposé à celui-ci, les tétons (15) des bielles étant logés dans des pistes de guidage (16a-16d) ménagées dans un organe de commande (17) monté mobile sur le corps (1) entre des première et seconde positions extrêmes, les pistes de guidage étant conformées pour que les bielles (14a-14d) obligent les ailettes (7) à venir dans l'une de leurs positions extrêmes lorsque l'organe de commande (17) est dans sa première position extrême et dans leur autre position extrême lorsque l'organe de commande est dans sa seconde position extrême, **caractérisé en ce que** la position extrême mentionnée en premier des ailettes (7) est une position ouverte dans laquelle celles-ci s'étendent approximativement parallèlement à la direction du flux d'air circulant devant elles, alors que l'autre position extrême des ailettes (7) est une position fermée dans laquelle celles-ci s'étendent approximativement perpendiculairement à la direction de sortie du flux d'air hors du conduit (4), **en ce que** les tourillons (8,9) des ailettes (7) sont respectivement logés dans des encoches (10,11) ménagées dans les deux côtés opposés prédéterminés de la sortie (6) du conduit (4), et **en ce que** l'organe de commande (17) est déplaçable par pivotement sur le corps (1)..

2. Aérateur selon la revendication 1, **caractérisé en ce que** les ailettes (7) sont en contact intime les unes à la suite des autres et obturent complètement la sortie (6) du conduit (4) lorsqu'elles sont dans leur position extrême fermée.

3. Aérateur selon la revendication 1 ou 2, **caractérisé en ce que** les tourillons (8,9) des ailettes (7) sont situés dans le prolongement de l'un des côtés longitudinaux de celles-ci.

4. Aérateur selon l'une quelconque des revendications 1 à 3, **caractérisé en ce que** les encoches (10,11) comportent un fond dont la forme est complémentaire de celle des tourillons (8,9) et deux parois latérales pourvues chacune d'une protubérance, les protubérances des parois latérales des encoches étant situées l'une en face de l'autre et maintenant en place le tourillon correspondant.

5. Aérateur selon l'une quelconque des revendications 1 à 4, **caractérisé en ce que** l'organe de commande (17) est une molette triangulaire comportant une périphérie arquée (20) accessible depuis l'intérieur de l'habitacle du véhicule.

6. Aérateur selon la revendication 5, **caractérisé en ce que** la périphérie (20) de la molette (17) est crantée.

7. Aérateur selon la revendication 5 ou 6, **caractérisé en ce que** le corps (1) est recouvert par un cache (2) comprenant une première ouverture (21) située devant la sortie (6) du conduit (4) et une seconde ouverture (22) livrant passage à la périphérie (20) de la molette (17).

## Claims

1. A ventilator for introducing air into the passenger compartment of a vehicle, particularly an automotive vehicle, comprising a body (1) defining a conduit (4) having an inlet (5) to be connected to a conditioned air intake and an outlet (6) opening into the passenger compartment, and blades (7) disposed at the outlet of the conduit and movable between two extreme positions so as to change the direction of the air flow, said blades having two coaxial pivot pins (8, 9) projecting from their transverse faces and pivotally mounted on two predetermined opposite sides of the outlet (6) of conduit (4), each of the pivot pins (9) located on a same side of the blades being integral with a driving rod (14a-14d) carrying a stub extending parallel to the corresponding pivot pin, on the opposite side thereof, the stubs (15) of the driving rods being received in guide tracks (16a-16d) provided in a control member (17) movably mounted on the body (1) between first and second extreme positions, the guide tracks being formed so that the driving rods (14a-14d) cause the blades (7) to move to one of their extreme positions when the control member (17) is in its first extreme position and to their other extreme position when the control member is in its second extreme position, **characterized in that** the first mentioned extreme position of the blades (7) is an open position, in which these extend approximately parallel to the direction of the air flowing past them, while the other extreme position of the blades (7) is a closed position, in which these extend approximately perpendicular to the direction of the air flowing out of the conduit (4), **in that** the pivot pins (8, 9) of the blades (7) are respectively received in notches (10, 11) provided in the two predetermined opposite sides of the outlet (6) of conduit (4), and **in that** the control member (17) is pivotally movable on the body (1).

2. The ventilator according to claim 1, **characterized in that** the blades (7) are in intimate contact one after the other and completely close the outlet (6) of the conduit (4), when in their closed extreme position.

3. The ventilator according to claim 1 or 2, **characterized in that** the pivot pins (8, 9) of the blades (7) are located in prolongation of one of the longitudinal sides thereof.

4. The ventilator according to any of claims 1 to 3, **characterized in that** the notches (10, 12) comprise a bottom having a shape complementary to that of the pivot pins (8, 9) and two side walls each provided with a protrusion, the protrusions of the side walls of the notches being located face to face and maintaining the corresponding pivot pin in position.

5. The ventilator according to any of claims 1 to 4, **characterized in that** the control member (17) is a triangular wheel comprising an arc-shaped periphery (20) accessible from the inside of the vehicle passenger compartment.

6. The ventilator according to claim 5, **characterized in that** the periphery (20) of the wheel (17) is serrated.

7. The ventilator according to claim 5 or 6, **characterized in that** the body (1) is fitted with a cover (2) comprising a first opening (21) located in front of the outlet (6) of the conduit (4) and a second opening (22) for allowing passage of the periphery (20) of the wheel (17).

## Patentansprüche

1. Lüfter zum Einleiten von Luft in einen Fahrgastraum eines Fahrzeuges, insbesondere eines Kraftfahrzeuges, der umfasst:
einen Körper (1), der einen Kanal (4) begrenzt, der einen Einlass (5) umfasst, der mit einem Einlass für klimatisierte Luft und einem Ausgang (6), der in den Fahrgastraum mündet, verbunden ist, sowie Rippen (7), die auf Höhe des Kanals angeordnet sind und so zwischen zwei Endstellungen verschoben werden können, dass der Luftstrom verändert werden kann, wobei die Rippen zwei koaxiale Lagerzapfen (8, 9) aufweisen, die auf ihren Querseiten vorstehen und schwenkbar auf zwei vorbestimmten gegenüberliegenden Seiten des Austritts (6) des Kanals (4) angebracht sind, wobei jeder der Lagerzapfen (9) auf einer gleichen Seite der Rippen angeordnet ist, aus einem Stück mit einem Zwischenglied (14a-14d), das einen Ansatz aufweist, der sich parallel an dementsprechenden Lagerzapfen erstreckt, auf der diesem gegenüberliegenden Seite, wobei die Ansätze (15) der Zwischenglieder in Führungsbahnen (16a-16d) gelagert sind, die in einem Betätigungsorgan (17) angeordnet sind, das beweglich auf dem Körper (1) zwischen der ersten Endstellung und der zweiten Endstellung angebracht ist, wobei die Führungsbahnen angepasst sind, damit die Zwischenglieder (14a-14d) bewirken, dass sich die Rippen (7) in eine ihrer beiden Endstellungen bewegen, wenn sich das Betätigungsorgan (17) in seiner ersten Endstellung befindet, und in ihre andere Endstellung, wenn sich das Betätigungsorgan in seiner zweiten Endstellung befindet,
**dadurch gekennzeichnet, dass** die erste Endstellung der Rippen (7) eine offene Stellung ist, in der sch dieselben etwa parallel zu der Richtung des vor ihnen zirkulierenden Luftstromes erstrecken, wohingegen die andere Endstellung der Rippen (7) eine geschlossene Stellung ist, in der sich dieselben etwa senkrecht zu der Richtung des Austritts des Luftstromes aus dem Kanal (4) erstrecken; **dadurch**, dass die Lagerzapfen (8, 9) der Rippen (7) jeweils in Aussparungen (10, 11) gelagert sind, die auf zwei vorbestimmten gegenüberliegenden Seiten des Austritts (6) des Kanals (4) angeordnet sind; und dass das Betätigungsorgan (17) durch Schwenken auf dem Körper (1) verschoben werden kann.

2. Lüfter nach Patentanspruch 1, **dadurch gekennzeichnet, dass** die Rippen (7) gegenseitig in engem Kontakt stehen und den Austritt (6) des Kanals (4) vollständig absperren, wenn sie sich in ihrer geschlossenen Endstellung befinden.

3. Lüfter nach Patentanspruch 1 oder 2, **dadurch gekennzeichnet, dass** die Lagerzapfen (8, 9) der Rippen (7) in der Verlängerung einer der Längsseiten derselben angeordnet sind.

4. Lüfter nach einem der Patentansprüche 1 bis 3, **dadurch gekennzeichnet, dass** die Aussparungen (10, 11) einen Boden umfassen, dessen Form ergänzend zu der der Lagerzapfen (8, 9) ist, sowie zwei Seitenwände, die jeweils mit einem Vorsprung versehen sind, wobei einer der Vorsprünge der Seitenwände der Aussparungen gegenüber dem anderen angeordnet ist und den entsprechenden Lagerzapfen hält.

5. Lüfter nach einem der Patentansprüche 1bis 4, **dadurch gekennzeichnet, dass** das Betätigungsorgan (17) ein dreieckiges Rändelrad ist, das einen bogenförmigen Umfang (20) aufweist, zugänglich von dem Inneren des Fahrgastraumes des Fahrzeuges.

6. Lüfter nach dem Patentanspruch 5,**dadurch gekennzeichnet, dass** der Umfang (20) des Rändelrades (17) gekerbt ist.

7. Lüfter nach Patentanspruch 5 oder 6, **dadurch gekennzeichnet, dass** der Körper (1) mit einer Verkleidung (2) bedeckt ist, der eine erste Öffnung (21) aufweist, die vor dem Austritt (6) des Kanals (4) angeordnet ist, sowie eine zweite Öffnung (22), die einen Durchgang zu dem Umfang (20) des Rändelrades (17) bereitstellt.
